# FASCICULE DE BREVET EUROPEEN

(11) **EP 1 034 909 B1**
(45) Date de publication et mention de la délivrance du brevet: **07.05.2003**
(21) Numéro de dépôt: 00104055.9
(22) Date de dépôt: 28.02.2000
(51) Int. Cl.: B29C 33/48, B29D 30/06, B29C 33/00, B29C 33/30

(54) **Element moulant et moule d'une bande de roulement de pneumatique**
Formelement und Formwerkzeug für eine Reifenlauffläche
Moulding element and mould for a tyre tread

(30) Priorité: 10.03.1999 FR 9903053
(43) Date de publication de la demande: 13.09.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Merino Lopez, José, 63200 Riom (FR)
(74) Mandataire: Diernaz, Christian

(56) Documents cités:
- EP-A- 0 342 908
- DE-A- 4 426 950
- DE-A- 19 612 829
- FR-A- 2 772 663
- US-A- 1 733 064

## Description

L'invention concerne un nouveau type d'élément moulant destiné à équiper un moule pour mouler une découpure dans une bande de roulement en mélange de caoutchouc destinée à équiper un pneumatique; l'invention concerne également un moule équipé avec ce type d'élément moulant.

Dans une demande de brevet européen EP 0 968 802 déposée par la demanderesse, il a été proposé un élément moulant pour mouler dans une bande de roulement une incision de géométrie cylindrique délimitant un plot de gomme dont la paroi latérale est reliée par des ponts de gomme au reste de la bande.

Dans une variante présentée dans la demande précitée, un élément moulant comporte au moins deux parties moulantes ayant des formes générales cylindriques, lesdites parties moulantes étant montées libres en rotation autour d'un même axe **XX'** l'une par rapport à l'autre. Un premier cylindre porte au moins une lame moulante enroulée selon un premier angle autour de l'axe **XX'** pour former une hélice et un deuxième cylindre concentrique au premier comporte au moins une autre lame moulante enroulée autour du même axe **XX'** selon un second angle de signe opposé au signe du premier angle. Dans cette dernière configuration, il est envisagé que les lames moulantes desdits deux cylindres sont disposées de façon à ce que les lames du premier cylindre et celles du second soient en contact glissant les unes sur les autres de manière à constituer une sorte de treillis délimitant une pluralité d'orifices destinés à laisser passer le mélange de caoutchouc pendant le moulage pour former des ponts de liaison entre la paroi latérale du plot moulé et la bande de roulement.

Grâce à cet élément moulant proposé dans la demande précitée, le démoulage d'une bande après moulage et vulcanisation, c'est-à-dire l'extraction dudit élément moulant hors de cette bande, est rendu possible sans rupture des ponts moulés par la structure des parties moulantes et leur montage libre en rotation par rapport au moule. En effet, les efforts exercés par la gomme sur les lames moulantes en forme d'hélice, pendant le démoulage, créent un couple résultant qui fait tourner les parties moulantes autour de leur axe **XX'**.

Avec cette dernière disposition, il a été constaté, en particulier après plusieurs moulages, que le contact entre les lames était insuffisant et qu'il se formait, pendant le moulage, des films en mélange de caoutchouc entre lesdites lames. On obtient dès lors après moulage non pas une seule incision, mais au moins deux incisions non connectées entre elles. Les films en mélange de caoutchouc constituent des parois entre les incisions qui empêchent la libre circulation des fluides (air, eau) d'une incision vers l'autre et les isolent les unes des autres.

D'autre part, les efforts exercés par le mélange de caoutchouc cru au moment du moulage et de la pénétration des lames dans ledit mélange conduisent à une déformation des lames moulantes ayant pour conséquence une augmentation des épaisseurs des films moulés et à modification progressive de la géométrie desdites lames. Cette déformation est d'autant plus marquée que les lames employées sont d'épaisseur faible devant leur longueur (ce qui est souvent le cas pour le moulage d'incisions de largeur inférieure à 2 mm).

Les mêmes défauts sont constatés dans le cas du moulage d'une incision ne délimitant pas complètement un plot de gomme mais ayant une trace sur la surface externe de la bande dont la géométrie a la forme d'un arc de cercle.

Un objet de l'invention est de proposer un élément moulant permettant de mouler dans une bande de roulement une incision délimitée par deux parois principales reliées par une pluralité de ponts de liaison en mélange de caoutchouc, cet élément moulant comportant deux parties moulantes en contact l'une sur l'autre, ledit élément moulant ne présentant pas les inconvénients qui viennent d'être décrits. Bien entendu, l'élément moulant selon l'invention permet un démoulage sans rupture des ponts de liaison moulés.

Par démoulage, on entend qu'il est possible avec l'élément moulant selon l'invention d'extraire complètement ledit élément moulant de la bande après moulage sans occasionner de rupture des ponts de liaison moulés.

Dans ce but, l'élément moulant selon l'invention, destiné à mouler dans une bande une incision de forme circulaire autour d'un axe **XX'** dont les parois principales en vis-à-vis sont reliées par une pluralité de ponts de liaison en mélange de caoutchouc, comporte deux parties moulantes, chaque partie moulante comportant un support prolongé par au moins une lame moulante pour mouler une partie de ladite incision. Au moins une des parties moulantes comporte un support prolongé d'une lame au moins partiellement en hélice autour de l'axe **XX'** (c'est-à-dire que les lames de cette partie moulante ne décrivent qu'une fraction d'un tour complet autour de **XX'**), ledit support étant monté libre en rotation autour de **XX'** par rapport à l'autre partie moulante.

En outre, les lames moulantes d'une première partie moulante sont pourvues de passages agencés de manière à permettre l'engagement par coulissement des lames moulantes de la seconde partie moulante à l'intérieur desdits passages pour constituer l'élément moulant dans la configuration de moulage et former ainsi une pluralité d'orifices destinés à laisser passer le mélange de caoutchouc pour mouler les ponts de liaison. De plus, pour permettre l'engagement et le dégagement (mouvement inverse de l'engagement) des lames de la seconde partie moulante dans les passages prévus sur la première partie moulante, ladite seconde partie moulante est montée mobile en translation suivant la direction **XX'** par rapport à ladite première partie.

Cet élément moulant permet de mouler dans une bande de roulement une incision dont la trace sur la surface externe de ladite bande a la géométrie d'un arc de cercle.

L'élément moulant selon l'invention permet aussi de mouler une incision dont la trace sur la surface externe de ladite bande a la géométrie d'un cercle et délimite un plot de gomme de forme cylindrique d'axe **XX'**, ce plot de gomme ayant une paroi latérale qui est reliée à la bande de roulement par une pluralité de ponts de liaison.

Dans ce but, l'élément moulant comporte deux parties moulantes formées chacune d'un support prolongé d'au moins une lame de moulage, les lames de moulage d'au moins une des deux parties moulantes ayant la forme d'une hélice enroulée autour d'un axe **XX'** en formant au moins un tour complet. En outre, chaque partie moulante portant au moins une lame ayant la forme d'une hélice est montée mobile en rotation autour de **XX'** par rapport à l'autre partie moulante.

Cet élément moulant est caractérisé en ce que :
- les lames d'une première partie moulante sont pourvues de passages permettant l'engagement par coulissement des lames d'une seconde partie moulante pour former l'élément moulant dans la configuration de moulage,
- la seconde partie moulante, dont les lames sont engagées dans les passages de la première partie moulante, est assemblée avec ladite première partie pour former l'élément moulant de façon à être mobile en translation suivant la direction **XX'** par rapport à la première partie moulante afin de permettre l'engagement (et le dégagement) des lames de cette seconde partie moulante à l'intérieur desdits passages.

Dans la présente description, dès lors qu'il est fait référence à une première partie moulante d'un l'élément moulant, celle-ci est définie comme celle des parties moulantes dudit élément moulant dont les lames sont pourvues de passages pour l'engagement des lames d'une autre partie moulante (dite seconde partie moulante).

Au moment du démoulage, les mouvements relatifs de translation et de rotation des parties moulantes l'une par rapport à l'autre entraîne de manière systématique la rupture d'éventuels films de gomme qui ont éventuellement été moulés dans les jeux existant entre les passages prévus sur les lames de la première partie moulante et les lames de la seconde partie moulante.

Un élément moulant selon l'invention peut être indifféremment utilisé pour équiper un moule de moulage d'un pneumatique ou bien un moule pour mouler une bande de roulement destinée par exemple au rechapage d'un pneumatique.

Un autre objet de l'invention concerne un moule pour le moulage d'une bande de roulement destinée à équiper un pneumatique, ledit moule moulant au moins une incision délimitant un plot de gomme de forme cylindrique relié sur sa paroi latérale par au moins un pont de gomme à la bande.

Ce moule présente une surface de moulage sur laquelle font saillie une première partie moulante comportant au moins une lame et une deuxième partie moulante formée par au moins une lame ayant la forme d'une hélice autour d'un axe **XX'**.

La deuxième partie moulante est portée par un support monté libre en rotation à l'intérieur d'un logement prévu sur le moule. Les première et deuxième parties moulantes coopèrent pour mouler une incision isolant un plot de gomme de forme générale cylindrique d'axe **XX'** et dont la paroi latérale est reliée à la bande par au moins un pont de gomme.

Le moule selon l'invention est caractérisé en ce que :
- les lames de la première partie moulante sont pourvues de passages pour l'engagement par coulissement des lames de la deuxième partie dans les passages prévus sur les lames de ladite première partie afin d'obtenir la configuration de moulage,
- la deuxième partie moulante est montée mobile en translation suivant la direction **XX'** à l'intérieur de son logement dans le moule, de façon appropriée pour permettre le dégagement des lames de la première partie moulante hors des passages prévus sur la deuxième partie moulante afin de rendre possible le démoulage de l'élément moulant sans rupture des ponts de gomme.

D'autres possibilités et avantages de l'élément moulant et d'un moule selon l'invention seront fournis avec la description du dessin suivant dont le but est de présenter de manière non limitative des variantes de réalisation et selon lequel :
- la figure **1** montre un élément moulant comportant deux parties moulantes ayant leurs parois en contact et délimitant une pluralité d'orifices pour le passage de la gomme pendant le moulage d'une bande de roulement;
- la figure **2** représente une première variante d'élément moulant selon l'invention dans la configuration de moulage, l'élément moulant comportant deux parties moulantes, l'une desdites parties moulantes étant pourvue de trous pour le passage et la mise en place des lames de l'autre partie moulante;
- la figure **3** montre l'élément moulant de la figure **2** dans une phase intermédiaire du démoulage;
- la figure **4** montre un moule pourvu d'un logement à l'intérieur duquel est montée mobile une partie moulante;
- la figure **5** montre le moule de la figure **4** au cours de l'opération de démoulage.

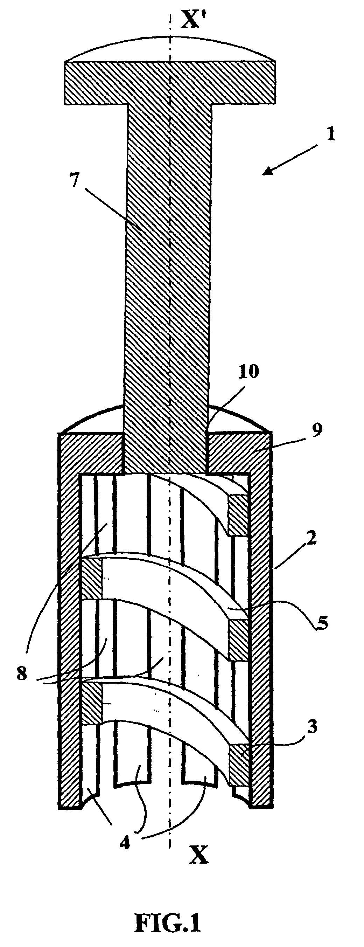

Sur la figure **1**, on voit un élément moulant **1** destiné à équiper un moule de moulage d'une bande de roulement pour pneumatique. Cet élément moulant **1**, destiné au moulage dans la bande de gomme d'une incision de géométrie cylindrique d'axe **XX',** comporte deux parties moulantes **2** et **3.** La partie moulante **2** est formée d'un support **9** prolongé par une pluralité de lames **4** s'étendant sensiblement parallèlement à la direction de l'axe **XX'**. . La partie moulante **3** comporte un support cylindrique **7** d'axe **XX'** et monté traversant le support **9** de la première partie moulante **2,** ledit support **27** portant une lame **5** enroulée en hélice autour de l'axe **XX'.**

Dans la configuration de moulage représentée sur la figure **1**, les lames **4** sont en contact avec la lame **5** en hélice de manière à délimiter une pluralité d'orifices pour laisser passer la gomme pendant le moulage d'une bande de roulement. La mise en contact desdites lames **4** et **5** permet de mouler une incision quasiment unique c'est-à-dire présentant une continuité de volume.

Comme cela a déjà été mentionné, les nombreux moulages effectués avec cet élément moulant sont souvent la cause de l'apparition d'un jeu ou espace entre les lames **4** et la lame **5** : il s'ensuit que les incisions moulées ne sont plus réunies pour n'en former qu'une à cause de la présence de films de gomme plus ou moins épais et donc plus ou moins résistants à la déchirure.

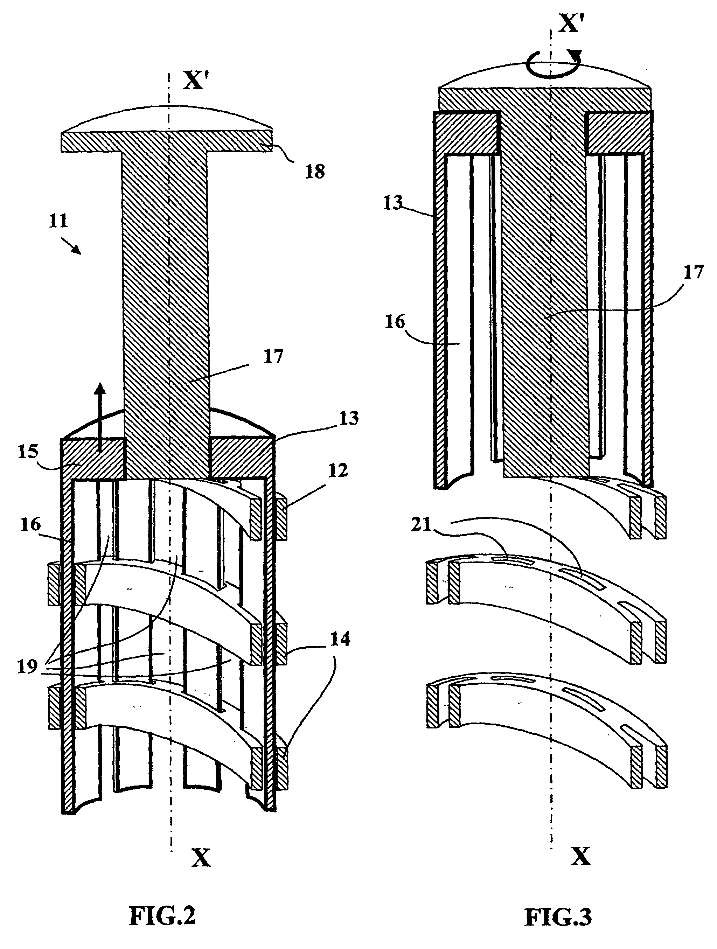

Pour éviter ce défaut, il est proposé un nouvel élément moulant dont une variante est représentée sur la figure **2.** Sur cette figure **2,** montrant un élément moulant **11** selon l'invention dans la configuration de moulage, on distingue :
- une première partie moulante **12** formée d'une lame **14** enroulée en hélice autour d'un axe **XX',** ladite lame **14** étant portée par un support cylindrique **17** à une extrémité; l'autre extrémité du support **17** est pourvue d'une partie élargie formant un épaulement **18**;
- une seconde partie moulante **13** comportant une pluralité de lames disposées à égale distance de l'axe **XX'** et s'étendant dans la direction **XX',** lesdites lames **16** étant portées par un support cylindrique **15**.

En outre et de façon identique au montage de l'élément moulant montré à la figure **1,** la première partie moulante **12** est assemblée avec la seconde partie moulante **13** de façon que le support **17** de cette première partie puisse coulisser dans la direction **XX**' par rapport au support **15** de ladite seconde partie.

De plus, la lame **14** de la première partie moulante **12** est pourvue d'une pluralité de passages **21** traversant ladite lame dans toute sa largeur suivant la direction **XX',** lesdits passages **21** étant disposés de manière appropriée pour permettre l'engagement par coulissement des lames **16** de la seconde partie moulante **13** à l'intérieur desdits passages pour former l'élément moulant **11** dans sa configuration de moulage.

De cette façon, il est possible de mouler une incision unique formée par les incisions moulées par les différentes lames **14** et **16** de l'élément moulant **11**, d'éventuels films de gomme formés au cours du moulage et obstruant localement ladite incision étant déchirés au moment du démoulage dont une phase est représentée sur la figure **3**.

D'autre part, le montage de l'élément moulant selon l'invention confère à celui-ci une rigidité suffisante pour lui permettre de résister aux efforts exercés sur ledit élément au moment de la pénétration dans le mélange de caoutchouc formant la bande à mouler.

Sur la figure 3, l'élément moulant de la figure **2** est montré après une première phase du démoulage. Dans cette première phase, la deuxième partie moulante **13**, dont les lames sont engagées dans celles de la première partie, a été déplacée suivant la direction **XX'** par rapport à ladite première partie moulante **12** d'une quantité appropriée pour dégager l'ensemble des lames droites **16** des trous **21** prévus sur la lame **14** de la première partie moulante **12** et pour que le support **15** de la seconde partie moulante **13** soit en contact avec l'épaulement **18** du support **17** de la première partie moulante.

Arrivé dans cette position, si l'on poursuit le mouvement de translation dudit élément moulant **11** parallèlement à **XX',** la lame en hélice **14,** montée libre en rotation par rapport à la partie moulante **13,** peut alors tourner autour de l'axe **XX'** pour finir le démoulage.

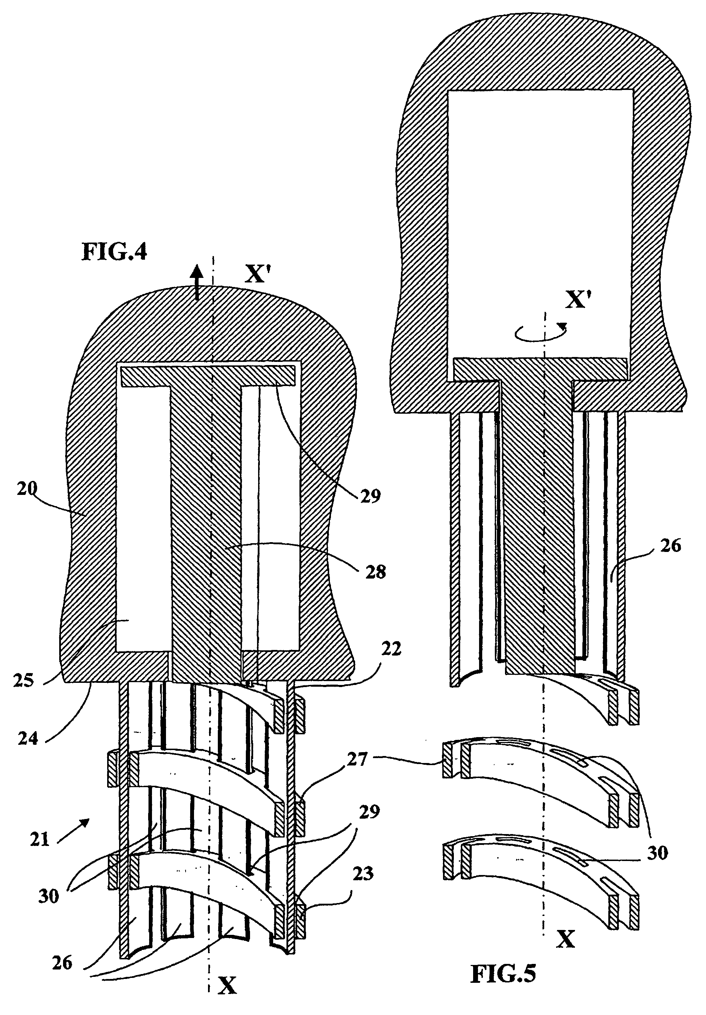

Par passage réalisé dans une lame comportant des parois, on entend soit un trou réalisé à l'intérieur même d'une lame (et débouchant sur deux parois) pour l'engagement par glissement d'une autre lame comme représenté sur les figures **2** et **3**, soit une sorte d'encoche non totalement fermée (c'est-à-dire débouchant sur trois parois de ladite lame) comme montré sur la figure **5**. En effet, après avoir constaté qu'il pouvait être difficile et coûteux de réaliser par usinage les passages sous forme de trous dans une lame, il est proposé de procéder à l'usinage au moyen d'un fil de découpe d'une encoche débouchant sur l'une des parois de la lame considérée. La forme de la découpe est déterminée pour permettre le passage d'une lame d'une autre partie moulante tout en assurant son guidage et son maintien pendant la phase de pénétration de l'élément moulant dans une bande de gomme.

Dans une variante de l'élément moulant selon l'invention, la première partie moulante comporte au moins une lame droite pourvue de passages destinés à l'engagement par coulissement de lames en hélice d'une seconde partie moulante; au cours de la première étape du démoulage, les lames en hélice sont dégagées des passages avant d'extraire les lames droites de la première partie hors de la bande moulée.

Une autre variante consiste à remplacer les lames droites de la seconde partie moulante par des lames enroulées également en hélice autour de **XX'** mais dans un sens de rotation opposé à celui des lames de la première partie moulante. Dans ce cas d'espèce, les lames en hélice de la seconde partie sont montées sur un support monté libre en rotation autour de **XX'.** Au cours de la première étape du démoulage, les lames de la seconde partie moulante sont dégagées des passages prévus sur la première partie par un mouvement de translation suivant **XX'** et par un mouvement de rotation autour de **XX'**.

Dans l'exemple d'élément moulant décrit avec les figures **2** et **3,** il n'est pas nécessairement indispensable que la ou les lames engagées dans les passages soit totalement dégagées de tous les passages pour terminer le démoulage; en effet, pour assurer une remise en place correcte et aisée desdites lames pour reformer l'élément moulant en configuration de moulage, il est intéressant que chaque lame reste toujours engagée dans au moins un passage. Ce passage peut se trouver hors de la bande moulée (par exemple, ce passage est destiné à être à l'intérieur du moule équipé avec ledit élément moulant). Dans cette variante, il est bien sûr nécessaire que les deux parties moulantes puissent tourner ensemble autour de **XX'** dans la dernière phase du démoulage.

Avantageusement et pour aider au mouvement de démoulage, l'élément moulant selon l'invention est équipé avec des moyens pour forcer la rotation à au moins une partie moulante comportant une lame moulante enroulée en hélice autour de **XX'**.

Avantageusement, l'élément moulant selon l'invention comporte en outre des moyens de rappel élastique pour engager des lames de la deuxième partie moulante à l'intérieur des passages prévus sur les lames de la première partie moulante afin de reformer l'élément moulant dans sa configuration de moulage avant de procéder au moulage d'une autre bande de roulement.

Un moule de moulage d'une bande de roulement peut être équipé d'au moins un élément moulant selon l'invention ou encore être réalisé comme décrit ci-après à l'aide des figures **4** et **5**.

La figure **4** montre une coupe d'une partie d'un moule **20** comportant un élément moulant **21** pour le moulage dans une bande de roulement d'une incision cylindrique délimitant un plot en mélange de caoutchouc relié à ladite bande par une pluralité de ponts de liaison. Cet élément moulant **21** comporte une première partie moulante **23** et une deuxième partie moulante **22** faisant toutes les deux saillie sur la surface de moulage **24** dudit moule. Ce moule comporte en outre un logement **25** débouchant sur sa surface de moulage **24**.

La première partie moulante **23** comporte une lame **27** qui est enroulée en hélice autour de **XX'** en formant plusieurs tours et est portée par un support cylindrique **28** de même axe **XX';** cette première partie moulante **23** est montée dans le logement **25** formé dans le moule **20** de manière à ce que son support **28** soit à la fois libre en rotation autour de **XX'** et en translation à l'intérieur dudit logement **25.** Un épaulement **29** prévu sur l'extrémité du support **28** axialement la plus éloignée de la surface de moulage **24** permet de limiter le mouvement de translation dans la direction **XX'** de la deuxième partie moulante **23** par rapport au moule **20**.

La deuxième partie moulante **22** comporte plusieurs lames **26** orientées dans la direction de l'axe **XX'**, ces lames étant montées solidaires avec le moule **20** de façon à suivre ledit moule dans tous ses déplacements. Les lames **26** ont, dans un plan perpendiculaire à l'axe **XX'**, une géométrie en arc de cercle.

La lame en hélice **27** est pourvue d'une pluralité de passages **29** traversant ladite lame dans la direction **XX'** pour permettre la mise en place par glissement des lames droites **26** pour obtenir la configuration de moulage. Dans cette configuration, la lame en hélice **27** et les lames droites **26** coopèrent pour former un même élément moulant pour mouler une incision de géométrie globale cylindrique d'axe **XX'** isolant un plot de gomme dont les parois principales sont reliées à la bande de roulement par une pluralité de ponts de liaison en gomme moulés dans les espaces **30** formés par la lame en hélice **27** et lames **26**.

Sur la figure **5**, ce même élément moulant 21 est représenté après une première phase de démoulage ayant consisté à déplacer le moule **20** dans sa direction de démoulage parallèle à la direction **XX'**. Dans cette première phase, le moule entraîne avec lui les lames droites **26** tandis que la lame en hélice **27** reste à l'intérieur de la bande moulée, le support de ladite lame se déplaçant à l'intérieur du logement **25**.

Après extraction des lames droites **26** hors de la matière moulée et hors des passages **29** prévus dans la lame en hélice **27**, le support de la deuxième partie de l'élément moulant venant en contact sur des butées prévues sur le moule, ce dernier entraîne à son tour ladite deuxième partie qui tourne sous l'action des forces de contact de la gomme sur la lame en hélice. Ainsi, il est possible d'effectuer le démoulage dans un seul mouvement de démoulage (dans une même direction) sans rompre les ponts de liaison moulés.

Les lames **26** de la deuxième partie moulante **22** peuvent avantageusement avoir une section transversale continûment variable, la section la plus grande étant située près de la surface de moulage **24**; cette disposition assure une rigidité appropriée pour permettre une bonne mise en place et faciliter le démoulage desdites lames. Bien entendu les passages prévus sur la lame en hélice **27** ont des sections appropriées. De manière générale, il est avantageux que la section transversale de l'une quelconque des lames de la première et de la deuxième partie moulante soit variable et décroissante en partant de la surface de moulage.

L'exemple présenté avec une seule lame en hélice peut aisément être étendu au cas de plusieurs lames en hélice montées sur un même support, lesdites lames étant enroulées dans le même sens autour de **XX'** pour permettre le démoulage par rotation.

Le moule décrit avec les figures **4** et **5** prévoyait qu'une lame en hélice était pourvue de passages pour l'engagement des lames droites solidaires de tous les mouvements du moule; il est également possible d'envisager que les passages soient prévus sur les lames droites pour permettre l'engagement des lames en hélice. Dans cette variante, des moyens supplémentaires sont prévus pour mettre en rotation les lames en hélices à l'intérieur du logement dans le moule de façon à dégager lesdites lames et à réaliser la première phase du démoulage. Ensuite, par déplacement du moule dans sa direction de démoulage et avec lui les lames droites, il est aisé de terminer le démoulage sans rompre les ponts de liaison moulés.

## Revendications

1. Élément moulant (**11**) pour équiper un moule de moulage d'une bande de roulement et destiné à mouler dans cette bande une incision de forme circulaire autour d'un axe **XX'** dont les parois principales en vis-à-vis sont reliées par une pluralité de ponts de liaison en mélange de caoutchouc, ledit élément moulant (**11**) comportant deux parties moulantes (**12, 13**), chaque partie moulante étant formée par un support (**15,17**) prolongé par au moins une lame moulante (**14, 16**) pour mouler une partie de ladite incision, au moins une des parties moulantes comporte un support (**17**) prolongé d'une lame (**14**) au moins partiellement en hélice autour de l'axe **XX'**, ledit support (**17**) étant monté libre en rotation autour de **XX'** par rapport à l'autre partie moulante, les lames (**14, 16**) desdites parties moulantes coopérant pour délimiter une pluralité d'orifices (**19**) destinés au moulage des ponts de liaison, l'élément moulant étant **caractérisé en ce que** :
- les lames moulantes (**14**) d'une première partie moulante (**13**) sont pourvues de passages (**21**) agencés de manière à permettre l'engagement par coulissement des lames moulantes (**16**) de la seconde partie moulante (**12**) à l'intérieur desdits passages pour constituer l'élément moulant dans la configuration de moulage et former ainsi une pluralité d'orifices (**19**) destinés à laisser passer le mélange de caoutchouc pour mouler les ponts de liaison, et **en ce que**
- le support (**17**) de la seconde partie moulante (**12**) est monté mobile en translation par rapport à la première partie moulante (**13**), pour permettre l'engagement des lames de ladite seconde partie moulante dans les passages prévus sur la première partie moulante et leur dégagement pendant le démoulage.

2. Élément moulant (**11**) selon la revendication **1 caractérisé en ce que** cet élément moulant comporte au moins une lame de moulage (**14**), portée par l'une des parties moulantes de l'élément moulant, qui est enroulée autour de l'axe **XX'** sous la forme d'une hélice en formant au moins un tour complet pour mouler une incision délimitant un plot de gomme de forme cylindrique d'axe **XX'**, ledit plot ayant sa paroi latérale reliée à la bande par une pluralité de ponts de gomme.

3. Élément moulant selon la revendication 2 **caractérisé en ce que** chaque lame de la première partie moulante a une géométrie en hélice autour de l'axe **XX'** et est pourvue d'au moins un passage pour permettre l'engagement d'une lame de la seconde partie moulante et **en ce que** ladite première partie est montée libre en rotation autour de l'axe **XX',** de façon à pouvoir tourner autour de cet axe **XX'** pendant le démoulage.

4. Élément moulant selon la revendication **3 caractérisé en ce que** chaque lame de la deuxième partie moulante est une lame droite sensiblement parallèle à l'axe **XX'** capable de coulisser à l'intérieur d'au moins un passage réalisé sur la première partie moulante.

5. Élément moulant selon la revendication **3 caractérisé en ce que** chaque lame de la deuxième partie moulante a une géométrie en hélice tournant en sens opposé par rapport au sens d'enroulement de chaque lame de la première partie moulante et **en ce que** ladite deuxième partie est montée à la fois mobile en translation suivant **XX'** et libre en rotation autour de l'axe **XX'**, de façon à permettre le démoulage sans rupture des ponts de liaison.

6. Élément moulant selon la revendication **1** ou la revendication **2 caractérisé en ce que** la première partie moulante comporte au moins une lame droite et **en ce que** la deuxième partie moulante comporte au moins une lame en hélice, ladite lame droite étant pourvue d'au moins un passage permettant l'engagement par coulissement d'une lame de ladite deuxième partie pour obtenir la configuration de moulage.

7. Élément moulant selon l'une des revendications **1** à **6 caractérisé en ce qu'**il est prévu des moyens pour forcer la rotation à au moins une partie moulante comportant une lame moulante enroulée en hélice autour de **XX'**.

8. Élément moulant selon l'une des revendications **1** à **7 caractérisé en ce que** qu'il est prévu des moyens de rappel élastique pour engager des lames de la deuxième partie moulante à l'intérieur des passages prévus sur les lames de la première partie moulante afin de reformer l'élément moulant dans sa configuration de moulage.

9. Moule de bande de roulement destinée à équiper un pneumatique comportant au moins un élément moulant selon l'une des revendications **1** à **8.**

10. Moule (**20**) de bande de roulement destinée à équiper un pneumatique, ce moule (**20**) présentant une surface de moulage **(24)** sur laquelle font saillie deux parties moulantes, une partie moulante (**22**) comportant au moins une lame (**26**) s'étendant dans une direction perpendiculaire à la surface de moulage (**24**) et solidaire du moule dans ses mouvements, et une autre partie moulante (**23**) formée par au moins une lame (**27**) ayant une forme en hélice autour d'un axe **XX'**, cette autre partie moulante (**23**) étant portée par un support (**28**) monté libre en rotation à l'intérieur d'un logement (**25**) prévu sur le moule, lesdites parties moulantes (**22, 23**) coopérant pour former un élément moulant (**21**) délimitant une pluralité d'orifices (**30**) et destiné à mouler un plot en mélange de caoutchouc de forme cylindrique d'axe **XX'**, ledit plot ayant une paroi latérale reliée à la bande de roulement par une pluralité de ponts de liaison, ledit moule étant **caractérisé en ce que**
- les lames en hélice 27 d'une première partie moulante (**23**) sont pourvues de passages (**29**) pour l'engagement par coulissement des lames (**26**) d'une deuxième partie moulante (22) dans lesdits passages (**29**) afin d'obtenir la configuration de moulage,
- la première partie moulante (**23**) est montée mobile en translation suivant la direction **XX'** à l'intérieur de son logement (**25**) dans le moule, de façon appropriée pour permettre le dégagement des lames (**26**) de la deuxième partie moulante (**22**) hors des passages (**29**) afin de rendre possible le démoulage de l'élément moulant sans rupture des pont de liaison.

11. Moule (**20**) de bande de roulement selon la revendication **10 caractérisé en ce que** des passages (**29**) sont prévus sur chaque lame (**26**) solidaire du moule pour permettre l'engagement des lames en hélice (**27**) pour constituer l'élément moulant dans sa configuration de moulage.

12. Moule de bande de roulement selon la revendication **10** ou la revendication **11 caractérisé en ce que** des moyens sont prévus pour limiter le mouvement de translation d'une partie moulante par rapport à l'autre partie moulante pour qu'au moins une lame moulante reste engagée dans un passage lorsque le démoulage est terminé de façon à assurer un guidage au mouvement d'engagement de chaque lame avant d'effectuer un autre moulage.

13. Moule de bande de roulement selon l'une des revendications **10** à **12 caractérisé en ce qu'**il est en outre prévu des moyens pour imposer un mouvement de rotation au support portant au moins une lame en hélice de façon à réaliser la configuration de moulage et/ou à faciliter le démoulage dudit élément.

## Patentansprüche

1. Formelement (11) zum Ausstatten eines Formwerkzeugs zum Abformen einer Lauffläche und dazu bestimmt, in diese Lauffläche einen kreisförmigen Einschnitt rund um eine Achse XX' abzuformen, dessen gegenüberliegende Hauptwände durch eine Vielzahl von Verbindungsbrücken aus Gummimischung verbunden sind, wobei das genannte, formgebende Element (11) zwei formgebende Teile (12, 13) aufweist, jeder formgebende Teil von einem Träger (15, 17) gebildet ist, der durch mindestens einen formgebenden Streifen (14, 16) verlängert ist, um einen Teil des genannten Einschnitts abzuformen, mindestens einer der formgebenden Teile einen Träger (17) aufweist, der durch einen mindestens teilweise um die Achse XX' wendelförmigen Streifen (14) verlängert ist, der genannte Träger (17) frei zur Drehung um die Achse XX' angebracht ist, auf den anderen formgebenden Teil bezogen, die Streifen (14, 16) der genannten, formgebenden Teile zusammenwirken, um eine Vielzahl von Öffnungen (19) zu umgrenzen, die zum Abformen der Verbindungsbrücken bestimmt sind, und das Formelement **dadurch gekennzeichnet ist, daß**:
- die formgebenden Streifen (14) eines ersten, formgebenden Teils (13) mit Durchlässen (21) versehen sind, die derart eingebracht sind, daß sie den Gleiteingriff der formgebenden Streifen (16) des zweiten, formgebenden Teils (12) im Inneren der genannten Durchlässe gestatten, um das Formelement in der Abformausbildung zu schaffen und so eine Vielzahl von Öffnungen (19) zu bilden, die dazu bestimmt sind, die Gummimischung zum Abformen der Verbindungsbrücken durchzulassen, und daß
- der Träger (17) des zweiten, formgebenden Teils (12) bezüglich des ersten, formgebenden Teils (13) translationsbeweglich angebracht ist, um den Eingriff der Streifen des genannten zweiten, formgebenden Teils in die genannten Durchlässe, die am ersten, formgebenden Teil vorgesehen sind, und das Lösen ihres Eingriffs beim Ausformen zu gestatten.

2. Formelement (11) nach Anspruch 1, **dadurch gekennzeichnet, daß** dieses Formelement mindestens einen Abformstreifen (14) aufweist, der von einem der formgebenden Teile des Formelements getragen ist, der in Form einer Wendel um die Achse XX' herumgewickelt ist, wobei er mindestens eine vollständige Umdrehung bildet, um einen Einschnitt abzuformen, der einen zur Achse XX' zylinderförmigen Klotz umgrenzt, wobei der genannte Klotz seine Seitenwand mit der Lauffläche durch eine Vielzahl von Gummibrücken verbunden hat.

3. Formelement nach Anspruch 2, **dadurch gekennzeichnet, daß** jeder Streifen des ersten, formgebenden Teils die Geometrie einer Wendel um die Achse XX' aufweist und mit mindestens einem Durchlaß versehen ist, um den Eingriff eines Streifens des zweiten, formgebenden Teils zu gestatten, und daß der genannte, erste Teil zur freien Drehung um die Achse XX' derart angebracht ist, daß er sich während des Ausformens um diese Achse XX' drehen kann.

4. Formelement nach Anspruch 3, **dadurch gekennzeichnet, daß** jeder Streifen des zweiten, formgebenden Teils ein gerader Streifen ist, der im wesentlichen parallel zur Achse XX' verläuft und imstande ist, im Inneren mindestens eines Durchlasses zu gleiten, der im ersten, formgebenden Teil hergestellt ist.

5. Formelement nach Anspruch 3, **dadurch gekennzeichnet, daß** jeder Streifen des zweiten, formgebenden Teils die Geometrie einer Wendel hat, die sich in einer Richtung dreht, die in Bezug auf die Drehrichtung eines jeden Streifens des ersten formgebenden Teils entgegengesetzt ist, und daß das genannte, zweite Teil gleichzeitig in Richtung XX' translationsbeweglich und um die Achse XX' frei drehbar ist, um auf diese Weise das Ausformen ohne Bruch der Verbindungsbrücken zu erlauben.

6. Formelement nach Anspruch 1 oder Anspruch 2, **dadurch gekennzeichnet, daß** der erste, formgebende Teil mindestens einen geraden Streifen aufweist, und daß der zweite, formgebende Teil mindestens einen wendelförmigen Streifen aufweist, wobei der gerade Streifen mit mindestens einem Durchlaß versehen ist, der den Gleiteingriff eines Streifens des genannten zweiten Teils erlaubt, um die Abformausbildung zu erreichen.

7. Formelement nach einem der Ansprüche 1 bis 6, **dadurch gekennzeichnet, daß** Mittel vorgesehen sind, um die Drehung mindestens eines formgebenden Teils zu erzwingen, das einen formgebenden Streifen aufweist, der wendelförmig um XX' gerollt ist.

8. Formelement nach einem der Ansprüche 1 bis 7, **dadurch gekennzeichnet, daß** elastische Rückstellmittel vorgesehen sind, um in die Streifen des zweiten, formgebenden Teils im Inneren der Durchlässe einzugreifen, die auf den Streifen des ersten formgebenden Teils vorgesehen sind, um das Formelement wieder in seine Abformausbildung zu verbringen.

9. Formwerkzeug für eine Lauffläche, die dazu bestimmt ist, einen Reifen auszustatten, mit mindestens einem Formelement nach einem der Ansprüche 1 bis 8.

10. Formwerkzeug (20) für eine Lauffläche, die dazu bestimmt ist, einen Reifen auszustatten, wobei dieses Formwerkzeug (20) eine Abformoberfläche (24) aufweist, auf der zwei formgebende Teile vorspringen, einen ersten, formgebenden Teil (22), der mindestens einen Streifen (26) aufweist, der sich in einer Richtung senkrecht zur Abformoberfläche (24) erstreckt und bei seinen Bewegungen fest mit dem Formwerkzeug verbunden ist, und einen anderen, formgebenden Teil (23), der aus mindestens einem Streifen (27) gebildet ist, der die Form einer Wendel um eine Achse XX' aufweist, wobei dieser andere, formgebende Teil (23) von einem Träger (28) getragen ist, der zur freien Drehung innerhalb eines Sitzes (25) angebracht ist, der auf dem Formwerkzeug vorgesehen ist, die genannten, formgebende Teile (22, 23) zusammenwirken, um ein Formelement (21) zu bilden, das eine Vielzahl von Öffnungen (30) begrenzt und dazu bestimmt ist, einen Klotz aus Gummimischung in zylindrischer Form bezüglich der Achse XX' abzuformen, der genannte Klotz eine Seitenwand aufweist, die mit der Lauffläche durch eine Vielzahl von Verbindungsbrücken verbunden ist, und das genannte Formwerkzeug **dadurch gekennzeichnet ist, daß**:
- die wendelförmigen Streifen 27 eines ersten, formgebenden Teils (23) mit Durchlässen (29) für den Gleiteingriff der Streifen (26) eines zweiten, formgebenden Teils (22) in den genannten Durchlässen (29) vorgesehen sind, um die Formausbildung zu erhalten, und
- der erste, formgebende Teil (23) in Richtung XX' translationsbeweglich im Inneren seines Sitzes (25) im Formwerkzeug in geeigneter Weise angebracht ist, um das Lösen des Eingriffs der Streifen (26) des zweiten, formgebenden Teils (22) aus den Durchlässen (29) zu gestatten, um das Ausformen des Formelements ohne Brechen der Gummibrücken möglich zu machen.

11. Formwerkzeug (20) für eine Lauffläche, nach Anspruch 10, **dadurch gekennzeichnet, daß** Durchlässe (29) auf jedem Streifen (26) vorgesehen sind, der fest mit dem Formwerkzeug verbunden ist, um den Eingriff der wendelförmigen Streifen (27) zu gestatten, um das Formelement in seiner Abformausbildung zu bilden.

12. Formwerkzeug für eine Lauffläche nach Anspruch 10 oder Anspruch 11, **dadurch gekennzeichnet, daß** Mittel vorgesehen sind, um die Translationsbewegung eines formgebenden Teils in Bezug auf den anderen, formgebenden Teil zu begrenzen, damit, wenn das Ausformen beendet ist, mindestens ein formgebender Streifen in Eingriff mit einem Durchlaß verbleibt, um eine Führung für die Eingriffsbewegung eines jeden Streiens sicherzustellen, bevor eine andere Abformung unternommen wird.

13. Formwerkzeug für eine Lauffläche nach einem der Ansprüche 10 bis 12, **dadurch gekennzeichnet, daß** außerdem Mittel vorgesehen sind, um dem Träger eine Drehbewegung aufzuerlegen, der mindestens einen wendeiförmigen Streifen trägt, um auf diese Weise die Abformausbildung wiederherzustellen und/oder das Ausformen des genannten Elements zu erleichtern.

## Claims

1. A moulding element (11) for equipping a mould for moulding a tread and intended to mould in this tread an incision of circular shape around an axis XX', the main opposing walls of which are connected by a plurality of connecting bridges of rubber mix, said moulding element (11) comprising two moulding parts (12, 13), each moulding part being formed by a support (15, 17) extended by at least one moulding blade (14, 16) for moulding part of said incision, at least one of the moulding parts comprising a support (17) extended by a blade (14) which is at least partially helical around the axis XX', said support (17) being mounted freely in rotation around XX' relative to the other moulding part, the blades (14, 16) of said moulding parts cooperating to define a plurality of orifices (19) intended for moulding the connecting bridges, the moulding element being **characterised in that**:
- the moulding blades (14) of a first moulding part (13) are provided with passages (21) arranged so as to permit the engagement by sliding of the moulding blades (16) of the second moulding part (12) within said passages to form the moulding element in the moulding configuration and thus to form a plurality of orifices (19) intended to allow the rubber mix to pass for moulding the connecting bridges, and **in that**
- the support (17) of the second moulding part (12) is mounted so as to be mobile in translation relative to the first moulding part (13), to permit the engagement of the blades of said second moulding part in the passages provided on the first moulding part and the disengagement thereof during demoulding.

2. A moulding element (11) according to Claim 1, **characterised in that** this moulding element comprises at least one moulding blade (14), borne by one of the moulding parts of the moulding element, which is wound around the axis XX' in the form of a helix, forming at least one complete turn, to mould an incision defining a rubber block of cylindrical shape of axis XX', said block having its lateral wall connected to the tread by a plurality of rubber bridges.

3. A moulding element according to Claim 2, **characterised in that** each blade of the first moulding part has a helical geometry about the axis XX' and is provided with at least one passage to permit the engagement of a blade of the second moulding part and **in that** said first part is mounted freely in rotation about the axis XX', so as to be able to rotate about this axis XX' during demoulding.

4. A moulding element according to Claim 3, **characterised in that** each blade of the second moulding part is a straight blade substantially parallel to the axis XX' capable of sliding within at least one passage formed on the first moulding part.

5. A moulding element according to Claim 3, **characterised in that** each blade of the second moulding part has a helical geometry turning in the opposite direction to the direction of winding of each blade of the first moulding part and **in that** said second part is mounted both to be mobile in translation along XX' and free in rotation about the axis XX', so as to permit demoulding without breaking the connecting bridges.

6. A moulding element according to Claim 1 or Claim 2, **characterised in that** the first moulding part comprises at least one straight blade, and **in that** the second moulding part comprises at least one helical blade, said straight blade being provided with at least one passage permitting the engagement by sliding of a blade of said second part to obtain the moulding configuration.

7. A moulding element according to one of Claims 1 to 6, **characterised in that** means are provided for forcing rotation on at least one moulding part comprising a moulding blade wound helically about XX'.

8. A moulding element according to one of Claims 1 to 7, **characterised in that** elastic return means are provided for engaging the blades of the second moulding part within the passages provided on the blades of the first moulding part in order to reform the moulding element in its moulding configuration.

9. A mould for a tread intended to be fitted on a tyre comprising at least one moulding element according to one of Claims 1 to 8.

10. A mould (20) for a tread intended to be fitted on a tyre, this mould (20) having a moulding surface (24) from which project two moulding parts, one moulding part (22) comprising at least one blade (26) extending in a direction perpendicular to the moulding surface (24) and integral with the movements of the mould, and another moulding part (23) formed by at least one blade (27) having the form of a helix around an axis XX', this other moulding part (23) being borne by a support (28) mounted freely in rotation within a housing (25) provided on the mould, said moulding parts (22, 23) cooperating to form a moulding element (21) which defines a plurality of orifices (30) and is intended to mould a block of rubber mix of cylindrical form of axis XX', said block having a lateral wall connected to the tread by a plurality of connecting bridges, said mould being **characterised in that**:
- the helical blades (27) of a first moulding part (23) are provided with passages (29) for the engagement by sliding of the blades (26) of a second moulding part (22) in said passages (29) in order to obtain the moulding configuration,
- the first moulding part (23) is mounted so as to be mobile in translation in the direction XX' within its housing (25) in the mould, suitably to permit the disengagement of the blades (26) of the second moulding part (22) from the passages (29) in order to permit demoulding of the moulding element without breaking the rubber bridges.

11. A mould (20) for a tread according to Claim 10, **characterised in that** passages (29) are provided on each blade (26) which is integral with the mould to permit the engagement of the helical blades (27) to form the moulding element in its moulding configuration.

12. A mould for a tread according to Claim 10 or Claim 11, **characterised in that** means are provided for restricting the translational movement of a moulding part relative to the other moulding part so that at least one moulding blade remains engaged in a passage when demoulding is ended, so as to guide the engagement movement of each blade before effecting another moulding operation.

13. A mould for a tread according to one of Claims 10 to 12, **characterised in that** there are furthermore provided means for imposing a rotational movement on the support bearing at least one helical blade so as to effect the moulding configuration and/or to facilitate the demoulding of said element.
